# EUROPÄISCHE PATENTANMELDUNG

(11) **EP 4 043 740 A1**
(43) Veröffentlichungstag der Anmeldung: **17.08.2022**
(21) Anmeldenummer: 22153250.0
(22) Anmeldetag: 25.01.2022
(51) Int. Cl.: F16B 39/24, F16F 1/02

(54) **FINGERFEDERSCHEIBE**

(30) Priorität: 15.02.2021 DE 102021201407
(71) Anmelder: Robert Bosch GmbH, 70442 Stuttgart (DE)
(72) Erfinder: Nguyen, Quoc-Dat, 72654 Neckartenzlingen (DE)

(57) **Zusammenfassung**

Die Erfindung betrifft eine Fingerfederscheibe (1) zur Sicherung einer Nutmutter (12), umfassend einen ringförmigen Basisbereich (2), eine Innenverzahnung (3) an einer radial inneren Seite des Basisbereichs (2), und mehrere Fingerfedern (5), welche an einer radial äußeren Seite des Basisbereichs (2) um einen Umfang des Basisbereichs (2) verteilt angeordnet sind, wobei jede Fingerfeder (5) einen Verbindungbereich (51), welcher sich vom Basisbereich (2) radial nach außen erstreckt, und zumindest einen Federbereich (52), welcher sich vom Verbindungsbereich (51) ausgehend in Umfangsrichtung erstreckt, aufweist, und wobei der zumindest eine Federbereich (52) jeder Fingerfeder (5) zumindest teilweise von einer Basisebene (20) des Basisbereichs (2) vorstehend ausgebildet ist.

## Beschreibung

### Stand der Technik

Die vorliegende Erfindung betrifft eine Fingerfederscheibe, eine Verbindungsanordnung, welche die Fingerfederscheibe umfasst, ein Werkzeug zum Betätigen einer derartigen Verbindungsanordnung, ein Verbindungsset, sowie ein Fahrzeug mit einer Verbindungsanordnung.

Bekannt sind Nutmuttern zur axialen Sicherung von Welle-Nabe-Verbindungen. Beispielsweise werden solche Nutmutter bei Fahrrädern oder Elektrofahrrädern verwendet, um ein Kettenblatt auf einem Innenlager zu befestigen. Aufgrund der wirkenden Kettenkräfte und Schwingungen kann die Nutmutter mit der Zeit gelockert werden, was zu einem Wackeln des Kettenblatts führen kann.

Weiterhin sind Sicherungsbleche bekannt, welche zur Sicherung von Nutmuttern auf einer Welle vorgesehen sind, wie beispielsweise Sicherungsbleche gemäß DIN 5406. Ein derartiges Sicherungsblech weist mehrere Zungen an dessen Außendurchmesser auf. Eine dieser Zungen kann mittels eines Werkzeugs so umgebogen werden kann, dass diese in eine Nut der Nutmutter eingreift. Durch eine einzelne zusätzliche Zunge am Innendurchmesser des Sicherungsblechs, welche in Eingriff mit einer Nut einer Welle stehen kann, kann mittels des Sicherungsblechs eine Verdrehsicherung der Nutmutter relativ zur Welle erreicht werden.

### Offenbarung der Erfindung

Die erfindungsgemäße Fingerfederscheibe mit den Merkmalen des Anspruchs 1 zeichnet sich demgegenüber durch eine besonders einfache Anwendung bei einfacher Konstruktion und kostengünstiger Herstellbarkeit aus. Dies wird erfindungsgemäß erreicht durch eine Fingerfederscheibe zur Sicherung einer Nutmutter, umfassend einen ringförmigen Basisbereich, eine Innenverzahnung an einer radial inneren Seite des Basisbereichs, und mehrere Fingerfedern an einer radial äußeren Seite des Basisbereichs. Die Fingerfedern sind dabei um einen Umfang des Basisbereichs, insbesondere regelmäßig, verteilt angeordnet. Jede Fingerfeder weist einen Verbindungsbereich und zumindest einen Federbereich auf. Der Verbindungsbereich erstreckt sich dabei vom Basisbereich ausgehend radial nach außen. Vorzugsweise ist der Verbindungsbereich im Wesentlichen rechteckig ausgebildet. Der zumindest eine Federbereich der Fingerfeder erstreckt sich dabei vom entsprechenden Verbindungsbereich ausgehend in Umfangsrichtung des Basisbereichs. Jeder Federbereich ist dabei zumindest teilweise von einer Basisebene des Basisbereichs vorstehend ausgebildet.

Mit anderen Worten weist die Fingerfederscheibe einen Basisbereich auf, welcher insbesondere in Form einer Ringscheibe ausgebildet ist. Die Innenverzahnung erstreckt sich insbesondere von dem Basisbereich radial nach innen. Die Innenverzahnung kann dabei vielfältig ausgebildet sein, beispielsweise als Kerbverzahnung oder Keilverzahnung oder Evolventenverzahnung. Radial außerhalb des Basisbereichs sind die mehreren Fingerfedern um den Umfang des Basisbereichs verteilt angeordnet. Die Fingerfedern sind dabei vorzugsweise L-förmig oder T-förmig ausgebildet, derart, dass der Verbindungsbereich sich radial nach außen erstreckt und pro Verbindungsbereich sich mindestens ein Federbereich vom Verbindungsbereich ausgehend in Umfangsrichtung erstreckt. Dabei ist jeder Federbereich vorzugsweise vollständig, alternativ nur teilweise, gegen den Verbindungsbereich geneigt ausgebildet, um von der Basisebene des Basisbereichs vorzustehen. Insbesondere ist der Federbereich um eine radiale Achse gegen den Verbindungsbereich gebogen. Das heißt, dass beispielsweise eine Kante, um welche der Federbereich oder der Teil davon nach oben oder unten gebogen ist, in radialer Richtung bezüglich des Basisbereichs angeordnet ist. Vorzugsweise liegen der Basisbereich, die Innenverzahnung und der Verbindungsbereich gemeinsam in der Basisebene. Das heißt, nur der Federbereich oder ein Teil davon steht von der Basisebene vor.

Besonders bevorzugt ist die Fingerfederscheibe als ein einstückiges Bauteil ausgebildet, vorzugsweise als Blechteil.

Die Innenverzahnung kann somit in Eingriff mit einer Außenverzahnung einer Welle gebracht werden. Zusätzlich kann der vorstehende Federbereich in Eingriff mit Nuten einer Nutmutter gebracht werden. Dadurch, dass nur der sich in Umfangsrichtung erstreckende Federbereich der Fingerfeder zumindest teilweise von der Basisebene vorstehend ausgebildet ist, wirkt dieser als Rücklaufsperre für die Nutmutter, vorzugsweise in genau einer der Drehrichtung. Das heißt, durch die spezielle Anordnung der Federbereiche kann zumindest einer der Federbereiche in eine Nut der Nutmutter eingreifen, wodurch der Federbereich eine Drehung der Nutmutter in eine Drehrichtung sperrt. Dagegen erlaubt der Federbereich, insbesondere durch eine schräge Anordnung relativ zum Basisbereich, dass die Nutmutter in die entgegengesetzte Drehrichtung weiter gedreht werden kann.

Somit kann eine besonders einfache und kostengünstige Fingerfederscheibe bereitgestellt werden, welche eine Sicherung einer Nutmutter auf einer Welle gegen ein unbeabsichtigtes Lösen verhindert. Insbesondere bewirkt die Fingerfederscheibe dabei eine automatische Lösesicherung sobald die Nutmutter festgeschraubt wird, und ohne dass ein Eingriff zwischen Fingerfederscheibe und Nutmutter mittels eines separaten Werkzeugs hergestellt werden muss. Damit kann eine besonders zuverlässige Verdrehsicherung bereitgestellt werden.

Die Unteransprüche haben bevorzugte Weiterbildungen der Erfindung zum Inhalt.

Bevorzugt liegt der zumindest eine Federbereich jeder Fingerfeder in einer Fingerebene, welche in einem vordefinierten Winkel gegen die Basisebene geneigt ist. Vorzugsweise schneidet sich die Fingerebene in einem Mittelpunkt des Basisbereichs mit der Basisebene. Das heißt, der Federbereich kann beispielsweise als von dem Verbindungsbereich vorstehendes Blech ausgebildet sein, welches um eine radiale Richtung des Basisbereichs gegen den Verbindungsbereich gebogen ist. Dadurch kann eine besonders einfache Herstellung der Fingerfederscheibe ermöglicht werden.

Besonders bevorzugt beträgt der vordefinierte Winkel zwischen Fingerebene und Basisebene mindestens 5°, vorzugsweise maximal 50°, besonders bevorzugt mindestens 10°, insbesondere maximal 30°. Dadurch wird sichergestellt, dass ein definierter Eingriff zwischen dem Federbereich und einer Nut einer Nutmutter hergestellt werden kann, welcher zuverlässig hält.

Vorzugsweise weist jede Fingerfeder zwei Federbereiche auf, welche am Verbindungsbereich gegenüberliegend angeordnet sind. Das heißt, die beiden Federbereiche erstrecken sich vom entsprechenden Verbindungsbereich jeweils in entgegengesetzte Richtungen. Damit kann bei einfacher Konstruktion der Fingerfederscheibe eine besonders zuverlässige Sicherung der Nutmutter ermöglicht werden.

Weiter bevorzugt sind die beiden Federbereiche jeder Fingerfeder in entgegengesetzte Richtungen von der Basisebene vorstehend ausgebildet. Mit anderen Worten ist ein erster Federbereich jeder Fingerfeder von der Basisebene aus nach oben gebogen, wobei ein am entsprechenden Verbindungsbereich gegenüberliegender zweiter Federbereich von der Basisebene aus nach unten gebogen ist. Dadurch kann eine besonders einfache Handhabung der Fingerfederscheibe ermöglicht werden, da die Fingerfederscheibe beidseitig montiert werden kann.

Besonders bevorzugt weist jede Fingerfeder genau einen Federbereich auf, wobei der Federbereich von einer ersten Seite der Basisebene vorsteht. Dabei erstreckt sich der Federbereich vom Verbindungsbereich ausgehend entgegen des Uhrzeigersinns bei Betrachtung der ersten Seite der Basisebene. In diesem Fall sind sämtliche Fingerfedern gleich ausgerichtet und weisen jeweils genau einen Federbereich auf. Dabei sind die Fingerfedern so ausgebildet, um eine Drehung einer Nutmutter im Uhrzeigersinn zu sperren, wobei sie eine Drehung der Nutmutter entgegen des Uhrzeigersinns erlauben. Somit eignet sich diese Fingerfederscheibe besonders zur Sicherung einer Nutmutter mit Linksgewinde.

Bevorzugt ist die Fingerfederscheibe aus Metall, vorzugsweise Federstahl, gebildet. Dadurch kann eine besonders robuste, mehrfach verwendbare Fingerfederscheibe bereitgestellt werden. Alternativ bevorzugt ist die Fingerfederscheibe aus Kunststoff gebildet. Eine Fingerfederscheibe aus Kunststoff ist besonders einfach und kostengünstig herstellbar und bietet den Vorteil einer besonders leichtgängigen Betätigung. Beispielsweise kann eine aus Kunststoff gebildete Fingerfederscheibe ferner so ausgebildet sein, dass diese bei Drehung einer Nutmutter in Sperrrichtung bricht, wenn die Nutmutter mit einem vordefinierten hohen Abziehdrehmoment betätigt wird. In diesem Fall ist die Fingerfederscheibe nur einmalig verwendbar, bietet aber eine besonders einfache Handhabung, ohne dass spezielle Werkzeuge erforderlich sind.

Weiterhin führt die Erfindung zu einer Verbindungsanordnung eines, insbesondere mit Muskelkraft und/oder Motorkraft betreibbaren, Fahrzeugs. Die Verbindungsanordnung umfasst die beschriebene Fingerfederscheibe und eine Nutmutter mit einer Vielzahl an Nuten, welche um den Umfang der Nutmutter, insbesondere gleichmäßig, verteilt angeordnet sind.

Bevorzugt sind eine Anzahl der Nuten der Nutmutter und eine Anzahl der Federbereiche der Fingerfederscheibe unterschiedlich. Vorzugsweise ist die Anzahl der Nuten der Nutmutter geradzahlig, wobei die Anzahl der Federbereiche der Fingerfederscheibe ungeradzahlig ist, oder alternativ umgekehrt. Dadurch sind Nutmutter und Fingerfederscheibe so aufeinander abgestimmt, dass stets nur einer der Federbereiche in eine der Nuten eingreift. Vorteilhafterweise kann dadurch eine besonders feine Winkelabstimmung von Fingerfederscheibe und Nutmutter erreicht werden, das heißt, dass bei kleinen Drehwinkeln einer Verdrehung der Nutmutter relativ zur Fingerfederscheibe regelmäßig ein Eingriff eines der Federbereiche in eine der Nuten erfolgt.

Weiter bevorzugt sind die Fingerfederscheibe und die Nutmutter so ausgebildet, dass jeweils mindestens einer der Federbereiche in eine der Nuten einrastet, wenn die Fingerfederscheibe und die Nutmutter um mindestens 2°, vorzugsweise maximal 10°, besonders bevorzugt 5°, relativ zueinander verdreht werden. Damit kann eine besonders zuverlässige Sicherung der Nutmutter durch die Fingerfederscheibe erreicht werden, wobei sich die Nutmutter nur um geringe Drehwinkel, insbesondere kleiner als der beschriebene Drehwinkel, lockern kann.

Vorzugsweise umfasst die Verbindungsanordnung ferner eine Welle, welche eine Wellenverzahnung und ein Gewinde aufweist. Die Nutmutter ist dabei auf das Gewinde der Welle schraubt war, vorzugsweise mittels eines Innengewindes der Nutmutter. Die Fingerfederscheibe ist eingerichtet, um durch Eingriff der Innenverzahnung der Fingerfederscheibe mit der Wellenverzahnung der Welle und gleichzeitigem Eingriff von zumindest einem der Federbereiche der Fingerfederscheibe mit zumindest einer der Nuten der Nutmutter die Nutmutter auf der Welle zu sichern, insbesondere gegen ein Lösen der Verschraubung der Nutmutter auf der Welle.

Besonders bevorzugt umfasst die Verbindungsanordnung ferner ein Kettenblatt. Das Kettenblatt ist dabei auf der Welle angeordnet und mittels der Nutmutter befestigt. Die Fingerfederscheibe ist dabei zwischen dem Kettenblatt und der Nutmutter angeordnet. Vorzugsweise weist das Kettenblatt eine Innenverzahnung auf, welche in Eingriff mit einer Außenverzahnung der Welle steht, um eine Drehmomentübertragung vom Kettenblatt auf die Welle zu ermöglichen. Bevorzugt weist das Kettenblatt einen Kurbelstern auf, sodass das Kettenblatt zweiteilig, mit dem Kurbelstern, und insbesondere einem Kettenblattritzel, welches mit dem Kurbelstern verbunden ist, ausgebildet ist.

Ferner betrifft die Erfindung ein Werkzeug zum Betätigen der beschriebenen Verbindungsanordnung. Das Werkzeug umfasst eine Vielzahl an Zapfen, welches so ausgebildet sind, um in jeweils genau eine Nut der Nutmutter einzugreifen. Vorzugsweise weist das Werkzeug einen Grundkörper auf, an welchem die Zapfen kreisringförmig angeordnet sind, und sich bezüglich der jeweils gerade in axialer Richtung erstrecken. Jeder der Zapfen weist dabei eine vordefinierte Zapfenlänge auf, welche mindestens einer Dicke der Nutmutter entspricht. Vorzugsweise weist jeder Zapfen eine gerade Stirnseite auf, welche insbesondere senkrecht zur axialen Richtung angeordnet ist. Das Werkzeug kann so an die Verbindungsanordnung angesetzt werden, dass die Zapfen in jeweils eine Nut der Nutmutter eingreifen, um damit durch Drehung des Werkzeugs die Nutmutter zu drehen. Durch die spezielle Zapfenlänge bewirken die Zapfen, dass die Federbereiche der Fingerfederscheibe flachgedrückt, insbesondere in die Basisebene niedergedrückt, werden, sodass die Sperre der Nutmutter aufgehoben wird und die Nutmutter gelöst werden kann. Das spezielle Werkzeug erlaubt somit eine besonders einfache Handhabung der Verbindungsanordnung.

Weiterhin betrifft die Erfindung ein Verbindungsset, welche die beschriebene Verbindungsanordnung und das beschriebene Werkzeug umfasst.

Ferner führt die Erfindung zu einem Fahrzeug, insbesondere einem mit Muskelkraft und/oder Motorkraft betreibbaren Fahrzeug, besonders bevorzugt einem Elektrofahrzeug, welches die beschriebene Verbindungsanordnung umfasst. Vorzugsweise ist die Welle der Verbindungsanordnung dabei ein Teil eines Innenlagers und/oder einer Hohlwelle des Fahrzeugs.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine perspektivische Ansicht einer Fingerfederscheibe gemäß einem ersten Ausführungsbeispiel der Erfindung,
- Figur 2: eine Detailansicht der Fingerfederscheibe der Figur 1,
- Figur 3: eine perspektivische Ansicht einer Verbindungsanordnung mit der Fingerfederscheibe der Figur 1,
- Figur 4: ein Detail der Verbindungsanordnung der Figur 3,
- Figur 5: eine perspektivische Ansicht eines Verbindungssets mit der Verbindungsanordnung der Figur 3, und
- Figur 6: eine perspektivische Ansicht einer Fingerfederscheibe gemäß einem zweiten Ausführungsbeispiel der Erfindung.

### Bevorzugte Ausführungsformen der Erfindung

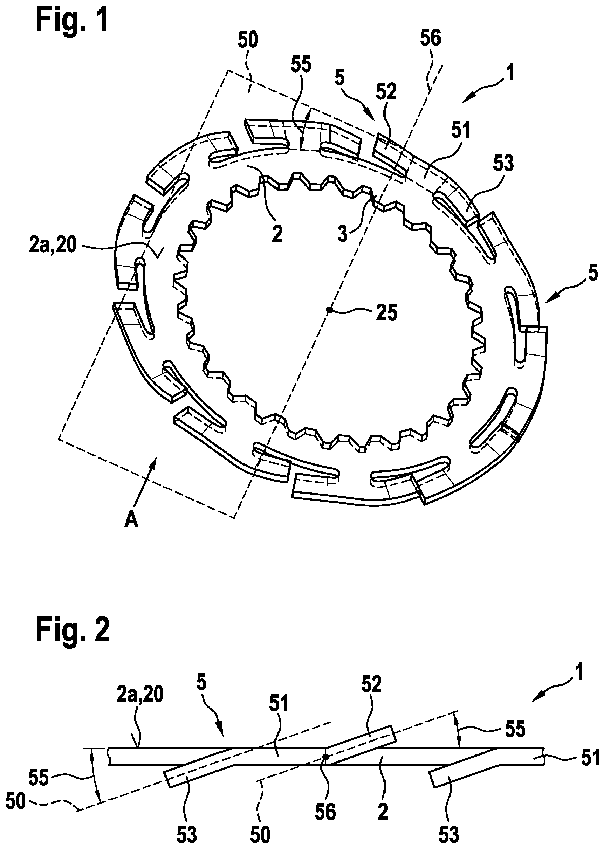

Figur 1 zeigt eine perspektivische Ansicht einer Fingerfederscheibe 1 gemäß einem ersten Ausführungsbeispiel der Erfindung. In Figur 2 ist ein Detail der Fingerfederscheibe 1 der Figur 1 dargestellt. Figur 2 zeigt dabei eine Seitenansicht der Fingerfederscheibe 1 aus der Betrachtungsrichtung A (vgl. Figur 1).

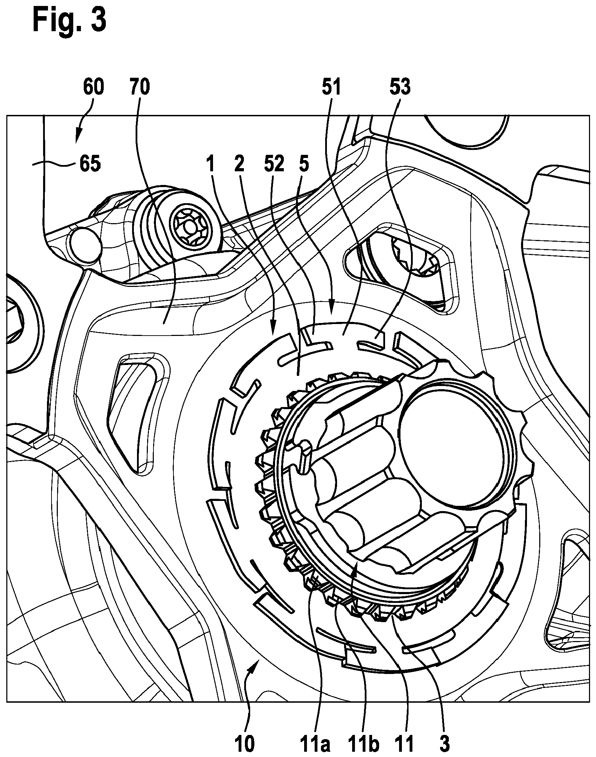

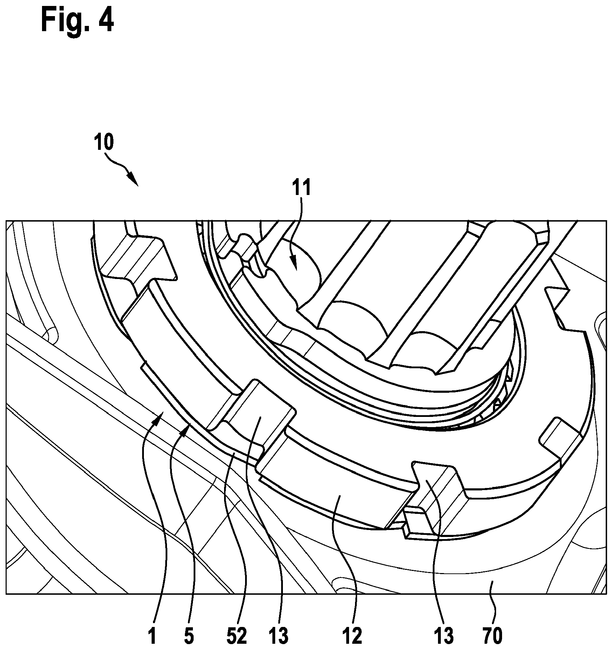

Die Fingerfederscheibe 1 ist eingerichtet zur Sicherung einer Nutmutter 12 auf einer Welle 11, wie weiter unten in Bezug auf die Figuren 3 und 4 erläutert.

Die Fingerfederscheibe 1 ist als einstückiges blechförmiges Bauteil ausgebildet und umfasst einen ringförmigen Basisbereich 2 und eine Innenverzahnung 3, welche in Form einer Kerbverzahnung ausgebildet ist, und welche an einer radial inneren Seite des Basisbereichs 2 angeordnet ist. Die Innenverzahnung 3 erstreckt sich um den gesamten Umfang.

Die Fingerfederscheibe 1 ist vorzugsweise aus Federstahl gebildet. Alternativ kann die Fingerfederscheibe 1 auch aus Kunststoff gebildet sein.

Weiterhin umfasst die Fingerfederscheibe 1 eine Vielzahl an Fingerfedern 5, welche an einer radial äußeren Seite des Basisbereichs 2 um den gesamten Umfang des Basisbereichs 2 gleichmäßig verteilt angeordnet sind. Die Fingerfedern 5 sind T-förmig ausgebildet. Jede Fingerfeder 5 weist einen Verbindungsbereich 51 auf, welcher sich ausgehend vom Basisbereich 2 radial nach außen erstreckt. Die Verbindungsbereiche 51 zweier nebeneinanderliegender Fingerfedern 5 sind in der Figur 1 mittels gestrichelten Linien angedeutet.

Jede Fingerfeder 5 weist zudem zwei Federbereiche 52, 53 auf, welche sich ausgehend von dem jeweiligen Verbindungsbereich 51 jeweils in Umfangsrichtung bezogen auf den Basisbereich 2 erstrecken. Die beiden Federbereiche 52, 53 sind dabei am Verbindungsbereich 51 gegenüberliegend angeordnet, erstrecken sich also in entgegengesetzter Richtung vom Verbindungsbereich 51 weg in Umfangsrichtung.

Jeder Federbereich 52, 53 ist dabei von einer Basisebene 20 des Basisbereichs 2 vorstehend ausgebildet. Als Basisebene 20 wird in der Figur 1 eine Oberseite 2a des Basisbereichs 2 angesehen. Ein erster Federbereich 52 jeder Fingerfeder 5 erstreckt sich dabei vom Verbindungsbereich 51 ausgehend entgegen des Uhrzeigersinns weg, wenn die erste Seite 2a der Basisebene 20 betrachtet wird.

Analog erstreckt sich ein zweiter Federbereich 52 jeder Fingerfeder 5 vom Verbindungsbereich 51 ausgehend in Richtung des Uhrzeigersinns weg, wenn die erste Seite 2a der Basisebene 20 betrachtet wird. Der erste Federbereich 52 ist dabei nach oben gebogen und der zweite Federbereich 53 ist nach unten gebogen, jeweils symmetrisch bezüglich des Basisbereichs 2 (vgl. Figur 2). Insbesondere ist jeder Federbereich 52, 53 jeweils um eine radiale Richtung 56 gegen den entsprechenden Verbindungsbereich 51 geneigt.

Im Detail liegt jeder der Federbereiche 52, 53 jeweils in einer Fingerebene 50, welche in einem vordefinierten Winkel 55 von 20° gegen die Basisebene 20 geneigt ist. Die Fingerebene 50 schneidet sich dabei in einem Mittelpunkt 25 des Basisbereichs 2 mit der Basisebene 20 (vgl. Figur 1).

Die Fingerfederscheibe 1 eignet sich besonders für den Einsatz in einer Verbindungsanordnung 10, wie in den Figuren 3 bis 5 dargestellt und nachfolgend beschrieben. Die Verbindungsanordnung 10 ist Teil eines (nicht dargestellten) Elektrofahrrads.

Die Verbindungsanordnung 10 umfasst die beschriebene Fingerfederscheibe 1, eine Welle 11 und ein Kettenblatt 60. Das Kettenblatt 60 umfasst ein Kettenblattritzel 65 und einen Kurbelstern 70, welche fest miteinander verbunden sind, wobei der Kurbelstern 70 einen radial inneren Bereich des Kettenblatts 60 bildet. Der Kurbelstern 70 weist eine (nicht dargestellte) Innenverzahnung auf, welche im Wesentlichen der Innenverzahnung 3 der Fingerfederscheibe 1 entspricht. Kurbelstern 60 und Fingerfederscheibe 1 sind auf der Welle 11 angeordnet, wobei die jeweiligen Innenverzahnungen in Eingriff mit einer Wellenverzahnung 11a der Welle 11 stehen.

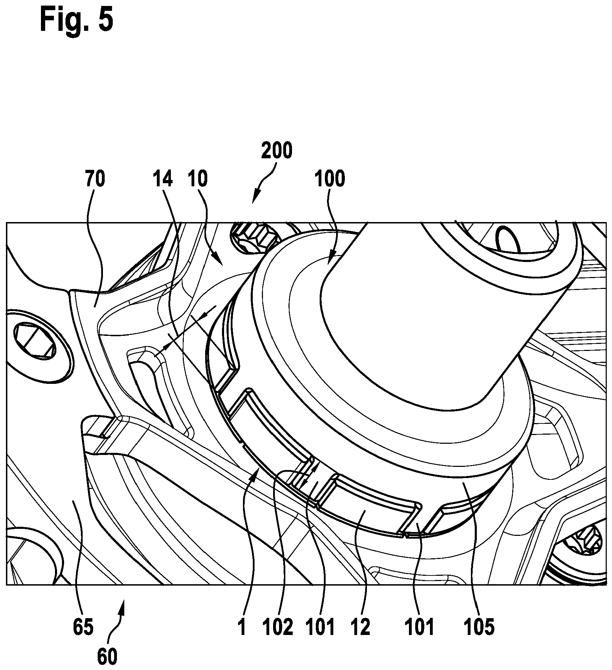

Im Bereich der Wellenverzahnung 11a weist die Welle 11 zudem ein Gewinde 11b auf, auf welches eine Nutmutter 12, welche ebenfalls ein Teil der Verbindungsanordnung 10 ist, aufschraubbar ist. Die Nutmutter 12 ist dabei in Figur 3 nicht dargestellt, sondern nur in den Figuren 4 und 5. Die Nutmutter 12 weist eine Vielzahl an Nuten 13 auf, welche an einem Außenumfang der Nutmutter 12 ausgebildet sind und welche gleichmäßig um den Umfang der Nutmutter 12 verteilt angeordnet sind.

Die Nutmutter 12 weist dabei ein Linksgewinde als Innengewinde auf, sodass die Nutmutter 12 durch Drehung entgegen des Uhrzeigersinns auf die Welle 11 aufgeschraubt werden kann. Durch die speziellen Fingerfedern 5 und insbesondere die beschriebene Ausrichtung der Federbereiche 52, 53, kann die Nutmutter 12 auf die Welle 11 aufgeschraubt werden, ohne dass dies behindert wird.

Die Federbereiche 52, 53, in den dargestellten Anordnungen jeweils die ersten Federbereiche 52, können dabei bei entsprechender Ausrichtung von Nutmutter 12 und Fingerfederscheibe 1 relativ zueinander in die Nuten 13 eingreifen, wie in der Figur 4 dargestellt. Ausgehend von einem solchen Zustand verhindern die Federbereiche 42 durch diesen Eingriff in die Nut 13, dass die Nutmutter 12 zurückgedreht werden kann, also im Uhrzeigersinn. Ein Lösen der Nutmutter 12 wird somit durch den Federbereich 52 verhindert. Hierdurch wird die Lösesicherung der Nutmutter 12 relativ zur Welle 11 mittels der Fingerfederscheibe 1 erzielt.

Die Fingerfederscheibe 1 bietet dabei den Vorteil einer besonders einfachen Anwendung. Durch die elastische Konstruktion und die speziell geformten Fingerfedern 5 wird automatisch die Lösesicherung erzielt, wenn die Nutmutter 12 fest angeschraubt wird. Eine separate Betätigung, beispielsweise mittels eines Werkzeugs, um die Sicherung der Nutmutter 12 vor einem Lösen herzustellen, ist dabei nicht notwendig.

Die Anzahl der Nuten 13 der Nutmutter 12 und die Anzahl der Federbereiche 52 der Fingerfederscheibe 1 sind dabei unterschiedlich. Zudem sind die Fingerfederscheibe und die Nutmutter 12 so ausgebildet, dass bei einer Relativdrehung der Nutmutter 12 zur Fingerfederscheibe 1 von 5° jeweils genau einer der Federbereiche 52 in eine der Nuten 13 einrastet. Dadurch kann eine besonders zuverlässige und kleinschrittige Sicherung der Nutmutter 12 ermöglicht werden.

Das Lösen der Nutmutter 12 von der Welle 11 kann mittels eines speziellen Werkzeugs 100 durchgeführt werden, welches in der Figur 5 dargestellt ist. Das Werkzeug 100 kann zusammen mit der Verbindungsanordnung 10 auch als Verbindungsset 200 angesehen werden.

Das Werkzeug 100 umfasst einen scheibenförmigen Grundkörper 105 und eine Vielzahl an Zapfen 101, welche so ausgebildet sind, um in jeweils in genau eine Nut 13 der Nutmutter 12 einzugreifen. Jeder Zapfen 101 weist dabei eine vordefinierte Zapfenlänge 102 auf, welche mindestens einer Dicke 14 der Nutmutter 12 in axialer Richtung entspricht.

Wenn das Werkzeug 100 zum Lösen der Nutmutter 12 in axialer Richtung so angesetzt wird, dass die Zapfen 101 in die Nuten 13 eingreifen, so werden die Federbereiche 52 der Fingerfederscheibe 1 durch die Zapfen 101 flachgedrückt, also in die Basisebene 20 gedrückt. Dadurch wird die Sperrwirkung der Federbereiche 52 aufgehoben und die Nutmutter 12 kann durch Drehung im Uhrzeigersinn von der Welle 11 abgeschraubt werden.

Falls die Fingerfederscheibe 1 aus einem Kunststoff gebildet ist kann alternativ zu dem beschriebenen Lösen der Nutmutter 12 durch Einsatz des Werkzeugs 100 auch ein alternatives beliebiges Werkzeug verwendet werden, welches geeignet ist, um ein Abziehdrehmoment auf die Nutmutter 12 aufzubringen. In diesem Fall kann die Fingerfederscheibe 1 so ausgebildet sein, dass die Federbereiche 52 brechen, wenn in Sperrrichtung ein vordefiniertes hohes Abziehdrehmoment, beispielsweise von mehr als 50 Nm, auf die Nutmutter 12 aufgebracht wird.

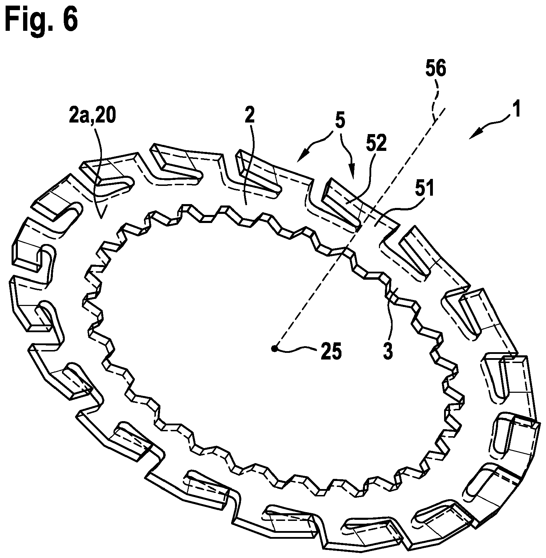

Figur 6 zeigt eine perspektivische Ansicht einer Fingerfederscheibe 1 gemäß einem zweiten Ausführungsbeispiel der Erfindung. Das zweite Ausführungsbeispiel entspricht im Wesentlichen dem ersten Ausführungsbeispiel der Figuren 1 bis 5, mit dem Unterschied, dass jede Fingerfeder 5 der Fingerfederscheibe 1 nur einen einzigen Federbereich 52 aufweist. Wie in der Figur 6 zu erkennen, sind sämtliche Fingerfedern 5 gleich ausgerichtet, und, wie im ersten Ausführungsbeispiel, dazu geeignet, eine Lösesicherung einer Nutmutter 12 mit Linksgewinde bereitzustellen. Die Fingerfederscheibe 1 des zweiten Ausführungsbeispiels kann nur in einer Ausrichtung auf der Welle 11 montiert werden, um die Sperrwirkung entfalten zu können, im Unterschied zum ersten Ausführungsbeispiel der Figuren 1 bis 5, in welchem die Fingerfederscheibe 1 beidseitig ausgerichtet werden kann. Dagegen bietet die Fingerfederscheibe 1 des zweiten Ausführungsbeispiels den Vorteil, dass eine größere Anzahl von Fingerfedern 5 um den Umfang verteilt vorgesehen ist. Dadurch ergibt sich eine feinere Winkelabstufung der Sperrwirkung. Das heißt, bei kleineren Drehwinkeln, insbesondere bei halbem Drehwinkel im Vergleich zum ersten Ausführungsbeispiel, erfolgt jeweils der Eingriff eines Federbereichs 51 in eine der Nuten 13.

## Patentansprüche

1. Fingerfederscheibe zur Sicherung einer Nutmutter (12), umfassend:
- einen ringförmigen Basisbereich (2),
- eine Innenverzahnung (3) an einer radial inneren Seite des Basisbereichs (2), und
- mehrere Fingerfedern (5), welche an einer radial äußeren Seite des Basisbereichs (2) um einen Umfang des Basisbereichs (2) verteilt angeordnet sind,
wobei jede Fingerfeder (5) einen Verbindungbereich (51), welcher sich vom Basisbereich (2) radial nach außen erstreckt, und zumindest einen Federbereich (52), welcher sich vom Verbindungsbereich (51) ausgehend in Umfangsrichtung erstreckt, aufweist, und
wobei der zumindest eine Federbereich (52) jeder Fingerfeder (5) zumindest teilweise von einer Basisebene (20) des Basisbereichs (2) vorstehend ausgebildet ist.

2. Fingerfederscheibe nach Anspruch 1, wobei der zumindest eine Federbereich (52) jeder Fingerfeder (5) in einer Fingerebene (50) liegt, welche in einem vordefinierten Winkel (55) gegen die Basisebene (20) geneigt ist, insbesondere wobei die Fingerebene (50) sich in einem Mittelpunkt (25) des Basisbereichs (2) mit der Basisebene (20) schneidet.

3. Fingerfederscheibe nach Anspruch 2, wobei der vordefinierte Winkel (55) mindestens 5°, vorzugsweise maximal 50°, beträgt.

4. Fingerfederscheibe nach einem der vorhergehenden Ansprüche, wobei jede Fingerfeder (5) zwei Federbereiche (52, 53), welche am Verbindungsbereich (51) gegenüberliegend angeordnet sind, aufweist.

5. Fingerfederscheibe nach Anspruch 4, wobei die beiden Federbereiche (52, 53) jeder Fingerfeder (5) in entgegengesetzte Richtungen von der Basisebene (20) vorstehen.

6. Fingerfederscheibe nach einem der Ansprüche 1 bis 3, wobei jede Fingerfeder (5) genau einen Federbereich (52) aufweist, der von einer ersten Seite (2a) der Basisebene (20) vorsteht und der sich vom Verbindungsbereich (51) ausgehend entgegen des Uhrzeigersinns erstreckt bei Betrachtung der ersten Seite (2a) der Basisebene (20).

7. Fingerfederscheibe nach einem der vorhergehenden Ansprüche, wobei die Fingerfederscheibe (1) aus Metall, insbesondere Federstahl, oder aus Kunststoff gebildet ist.

8. Verbindungsanordnung eines, insbesondere mit Muskelkraft und/oder Motorkraft betreibbaren, Fahrzeugs, umfassend:
- eine Fingerfederscheibe (1) nach einem der vorhergehenden Ansprüche, und
- eine Nutmutter (12) mit einer Vielzahl an um den Umfang verteilten Nuten (13).

9. Verbindungsanordnung nach Anspruch 8, wobei eine Anzahl der Nuten (13) der Nutmutter (12) und eine Anzahl der Federbereiche (52) der Fingerfederscheibe (1) unterschiedlich sind.

10. Verbindungsanordnung nach Anspruch 8 oder 9, wobei die Fingerfederscheibe (1) und die Nutmutter (12) so ausgebildet sind, dass bei einer Relativdrehung von Fingerfederscheibe (1) und Nutmutter (12) von mindestens 2°, vorzugsweise maximal 10°, besonders bevorzugt 5°, jeweils mindestens einer der Federbereiche (52) in eine der Nuten (13) einrastet.

11. Verbindungsanordnung nach einem der Ansprüche 8 bis 10, ferner umfassend eine Welle (11) mit einer Wellenverzahnung (11a) und einem Gewinde (11b), wobei die Nutmutter (12) auf das Gewinde (11b) der Welle (11) schraubbar ist, und wobei die Fingerfederscheibe (1) eingerichtet ist, durch Eingriff der Innenverzahnung (3) mit der Wellenverzahnung (11a) und gleichzeitigem Eingriff von zumindest einem der Federbereiche (52) mit einer der Nuten (13) die Nutmutter (12) auf der Welle (11) zu sichern.

12. Verbindungsanordnung nach einem der Ansprüche 8 bis 11, ferner umfassend ein Kettenblatt (60), welches insbesondere einen Kurbelstern (70) aufweist, wobei das Kettenblatt (60) auf der Welle (11) angeordnet ist, und mittels der Nutmutter (12) befestigt ist, und wobei die Fingerfederscheibe (1) zwischen Kettenblatt (60) und Nutmutter (12) angeordnet ist.

13. Werkzeug zum Betätigen einer Verbindungsanordnung (10) nach einem der Ansprüche 8 bis 12, umfassend eine Vielzahl an Zapfen (101), welche ausgebildet sind, um in jeweils genau eine Nut (13) der Nutmutter (12) einzugreifen, wobei die Zapfen (101) eine vordefinierte Zapfenlänge (102) aufweisen, welche mindestens einer Dicke (14) der Nutmutter (12) entspricht.

14. Verbindungsset, umfassend:
- eine Verbindungsanordnung nach einem der Ansprüche 8 bis 12, und
- ein Werkzeug nach Anspruch 13.

15. Fahrzeug, insbesondere mit Muskelkraft und/oder Motorkraft betreibbares Fahrzeug, vorzugsweise Elektrofahrrad, umfassend eine Verbindungsanordnung (1) nach einem der Ansprüche 8 bis 12, insbesondere wobei die Welle (11) der Verbindungsanordnung (1) Teil eines Innenlagers und/oder einer Hohlwelle des Fahrzeugs ist.
